# EUROPEAN PATENT SPECIFICATION

(11) **EP 2 074 892 B1**
(45) Date of publication and mention of the grant of the patent: **22.05.2013**
(21) Application number: 08172938.6
(22) Date of filing: 24.12.2008
(51) Int. Cl.: A23L 1/10, A21D 6/00

(54) **Process and plant for the production of precooked and gelatinized flour for food products specification**
Verfahren und Anlage zur Produktion von vorgekochtem und geliertem Mehl zur Spezifikation von Nahrungsmitteln
Processus et installation pour la production de farine précuite et gélatinée pour la spécification de produits alimentaires

(30) Priority: 27.12.2007 IT MI20072438
(43) Date of publication of application: 01.07.2009
(73) Proprietor: Storci S.p.A., 43044 Collecchio (PR) (IT); Fava S.p.A., 44042 Cento (FE) (IT)
(72) Inventor: Storci, Anzio, 43044 Collecchio (IT); Fava, Enrico, 44042 Cento (IT)
(74) Representative: Leone, Mario

(56) References cited:
- EP-A1- 0 105 787
- WO-A1-00/10406
- DE-A1- 2 401 023
- JP-A- 60 027 350
- US-A- 4 385 074

## Description

### FIELD OF INVENTION

The present invention addresses improvements to food flour production technology, and is particularly directed to a plant for the production of cereal-based food flours, in which the flour is precooked and gelatinized by a particular steam treatment, for the production of either fresh or dry pasta, and other food products; while the invention is suitable for the production of food products based on precooked and gelatinized products with or without gluten, it particularly finds application with gluten-free flours such as corn, rice, buckwheat flours.

### BACKGROUND OF THE INVENTION

Current food flour precooking and gelatinization plants do not ensure sufficient quality consistency, great changes being involved in the degree of precooking and gelatinization; this is caused by the difficulties in the management of process parameters, which provide food products of poorly uniform characteristics. This problem is obviated in certain non industrial systems, which are poorly profitable and unsuitable for industrial production capacities, due to very long processing time, above 24 hours.

The problem of controlling and obtaining an optimal and consistent precooking and gelatinization throughout the production process depends on a number of factors, particularly on the precooking and gelatinization treatment methods.

Flour gelatinization is generally required both for easily digestible food products, particularly for the production of gluten-containing flour-based baby food and gluten-free flour based-food products in the production of fresh and/or dry pasta.

In currently known and used technologies, flour gelatinization occurs with the raw material as it is, or during kneading and/or post-kneading; examples are disclosed in EP-A-0,872,188 and US-A2007/0,190,216.

Particularly, EP-A-0,872,188 discloses a method for preparing gluten-free pasta, which uses steam as a source of wet heat required for gelatinization of flour starch, but it does not indicate the times and methods for heat application.

On the other hand, US-A-2007/0,190,216 discloses a method and plant which includes a steam heating step during and after kneading. Here again no particular specifications are provided concerning the times and method of heating.

Therefore, typical prior art approaches appear to involve gelatinization by direct heating of the flour and dough during or immediately after kneading. Therefore, apparent difficulties are encountered in achieving a homogeneous and consistent degree of gelatinization throughout the production process, and from one process to another, which affect the quality of the final food product.

Hence, there arises the need of providing new solutions allowing improved process management and providing consistent and repeatable results. In view of obviating prior art drawbacks, and achieving the improvement purposes and advantages, the Applicant has conceived, tested and implemented an improved plant for the production of precooked and gelatinized food flours according to the present invention.

As used herein, the term "flour" is intended to indicate any semolina and common flour obtained by cereal milling.

EP0105787 relates a process for partial pregelatinization of a vegetable flour comprising moistening and heating, characterized in that it comprises moistening the flour to give it a total moisture content between 18 and 35%, heating with steam for 5 to 50 minutes, so that the temperature in the middle of the flour, measured at the exit of the heating device, is about 85 to 90 degrees C, grinding, and drying the treated flour. This flour is moistened placed 3 cm layer on trays. These trays are stacked on each other with a spacing of one centimeter between two successive trays. The assembly is then placed in an autoclave and steam admitted for 15 minutes at a pressure of 0.7 bar.

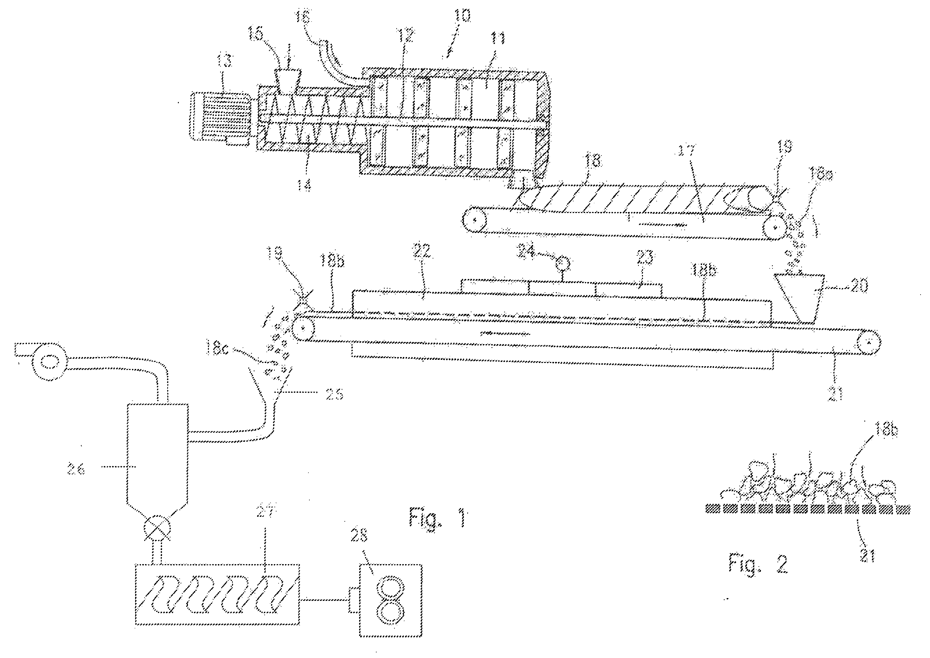

WO00/10406 is directed to a continuous process for the production of rice flour and dough. Rice flour and dough is made by hydrating rice flour or a blend of rice flour and other cereal components, tempering, and then cooking to partially gelatinize the starch in the flour. WO00/10406reveals a cooker which cooks with indirect and direct heat, such as a screw-type cooker and partially gelatinizes the starch in the rice flour or component blend. This cooker, as shown in Figure 1, is a elongated heating device which has a heat jacket surrounding a channel through which the tempered product is conveyed. The hydrated and tempered product is moved forward down the cooker by means of paddles on a hollow rotor in the device. The rotor is connected to a steam source to transmit steam to the paddles which are hollow and are open to receive steam from the rotor. Steam enters the rotor and is conveyed there through into the paddles which have one or more holes from which the steam is injected into the tempered product. The paddles uniformly distribute the steam in the product being cooked.

JP60027350 reveals a method for obtaining steamed cereal flour having high gelatinization degree and free from the tendency to form an agglomerate, by adding water to cereal flour, passing the mixture through the steam of steam, and boiling or steaming the product. Fine powder of cereals such as rice, rice bran, etc. is hydrated to a water-content of 29-33% to obtain moistened cereal flour having fluidity. The flour is subjected to the wet-heat treatment by passing through the steam of steam to get hot and moist cereal flour having a water-content of 33-36%, and the treated flour is again steamed or boiled to obtain the objective steamed flour. The product has a gelatinization degree of the starch of >=90% and excellent disintegrability and fluidity, and can be easily handled (e.g. transported, mixed, etc.) and digested with alpha-amylase.

DE2401023 discloses relates to a method of conditioning meal to bring it into condition for processing in apparatus such as an extruder or pelletizer. The invention has in particular, but not exclusively, utility in the production of animal food pellets. D2 provides a method of conditioning meal to bring it into condition for processing in apparatus such as an extruder or pelletizer, and which comprises providing a stream of meal and mixing it with steam and water, characterized by dividing said stream of meal into partial streams, adding steam and water to one of said streams in quantities causing starch gelatinization in the meal of said partial stream, and subsequently re-combining and mixing said partial streams.

### OBJECTS OF THE INVENTION

The main object of the present invention is to provide a plant for the production of precooked and gelatinized food flours with or without gluten, allowing management and adequate control of the precooking and gelatinization process throughout the production process.

Another object is to provide a plant that achieves a high gelatinization degree, and ensures result consistency in the processed food product.

Yet another object is to provide a plant that meet the current requirement of technologies capable of ensuring uniform treatment in flours and in the corresponding precooked and gelatinized food products.

### BRIEF DESCRIPTION OF THE INVENTION

The guiding principle of the present invention consists in that a flour precooking and gelatinization step is carried out using steam, on a flour layer previously subjected to a hydration step; this provides partial or total precooking and gelatinization of flour starches in a substantially homogeneous and consistent manner.

This may be achieved by a plant for the production of precooked and gelatinized food flours as defined in claim 1.

The invention provides a plant for carrying out the flour precooking and gelatinization process of the invention, comprising:
- a first mixer designed to mix and hydrate the flour;
- means for feeding the hydrated flour and forming it in granular form into a layer on a substrate, for precooking and gelatinization;
   means for steam treatment of the granular hydrated flour layer on said substrate and for maintaining it at a precooking and gelatinization temperature;
- a tunnel configured to receive a layer of said hydrated flour which is conveyed through a steam saturated environment.

Further aspects and characteristics of the plant of the present invention will be defined in the independent claim attached hereto.

### BRIEF DESCRIPTION OF THE DRAWINGS

The invention will be now described in greater detail with reference to the attached drawings in which:
Fig. 1 is a schematic view of a first plant for the production of precooked and gelatinized flours of the invention;
Fig. 2 shows an enlarged detail of figure 1;
Fig. 3 is a schematic view of a second plant for the production of precooked and gelatinized pasta and/or food products of the invention;
Fig. 4 is an illustrative flow chart of the plant of Fig. 1;
Fig. 5 is an illustrative flow chart of the plant of Fig. 3.

### DETAILED DESCRIPTION OF THE INVENTION

The present invention is based on the observation that consistent and homogeneous precooking and gelatinization of flours may be achieved by a steam treatment of a raw hydrated flour formed into a thin layer on a substrate, such as a vapor-permeable belt conveyor.

For the purposes hereof, the term "thin layer" is intended to indicate a layer of hydrated flour whose thickness allows uniform heating of the whole mass, such as a thickness of 15 cm or less, preferably of 2 to 10 cm.

A possible plant for the production of a precooked and gelatinized flour is shown by way of example in Figure 1. The plant is composed of a fast mixer 10, e.g. comprising a cylindrical mixing chamber 11 with a bladed rotor 12 driven by a motor 13. A metering screw 14 is placed upstream from the mixing chamber 11 and is controlled by the motor 13 of the mixer; numeral 15 designates a hopper for loading the raw, untreated flour, possibly pre-mixed with other ingredients, whereas numeral 16 designates a hydration water feeding conduit.

The hydrated flour that comes out of the mixer 10 falls onto a first belt conveyor 17 on which it is formed into a layer 18, and is maintained on the conveyor 17 for a predetermined period of time, required to ensure homogeneous hydration of every flour granule, e.g. for a rest time of 4 to 12 minutes.

At the end of the conveyor 17, a grain separator device 19 allows the flour to fall in separate granules 18a into the hopper of an underlying layer-forming device 20, which is located at the start of a second vapor-permeable belt conveyor 31, to form a thin layer 18b, as mentioned above.

The belt conveyor 21 extends along a steam treatment apparatus comprising a tunnel 22 along which the layer of hydrated flour is precooked and gelatinized, and a piping system 23 that feeds saturated steam at about 100°C from a steam generator 24 into the tunnel 22.

Therefore, the process for precooking and gelatinizing the granular flour, formed into a thin layer as mentioned above, is carried out in a steam saturated environment, at or slightly above atmospheric pressure. Tests on various types of flours showed that the creation of a layer of granular hydrated flour improves penetration and spreading of steam into the entire thickness of the granular flour, as shown in Figure 2.

At the end of the precooking and gelatinization step, the flour that comes out of the heat treatment tunnel 22 will have a temperature slightly lower than steam, e.g. a temperature of about 98°C. After grain separation 18c by the grain separator 19, the flour falls into a collection hopper 25 and transferred by a pneumatic conveyor system 26 to a dryer 27.

The dryer 27 and a succeeding calibrating mill 28 provide a calibrated dry flour, stabilized for storage, and adapted for later use in the preparation of various food products, such as precooked and gelatinized pasta, with or without gluten.

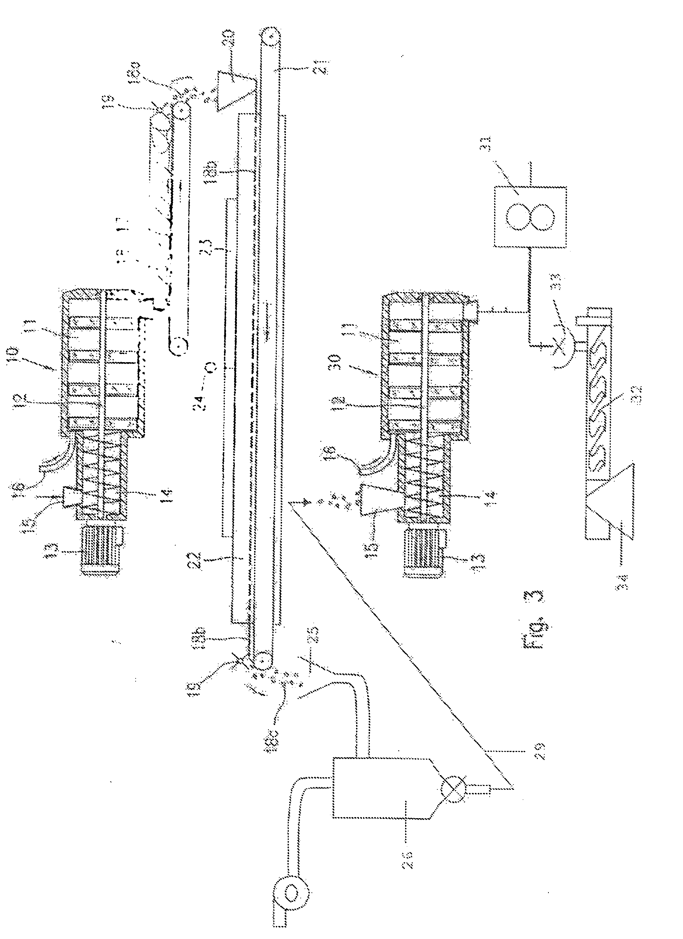

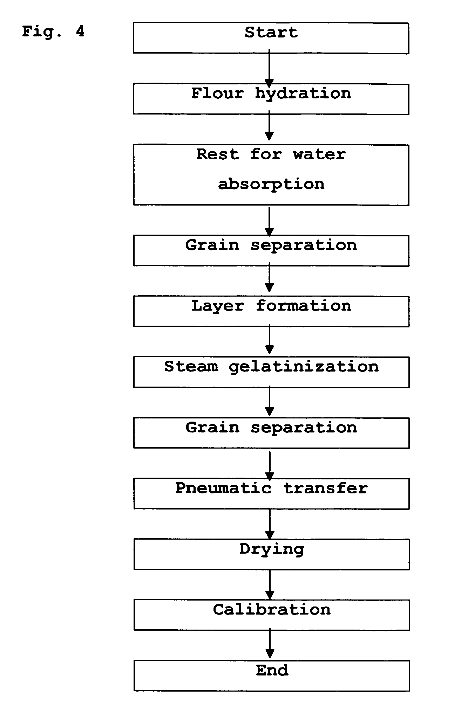

Figure 3 shows a second plant for the production of precooked and gelatinized pasta and/or food products using a precooked and gelatinized flour of the invention; since this is a development of the process and plant of Figure 1, Figure 4 uses the same reference numerals to designate similar or equivalent parts.

Once more, in the case of Figure 3, the layer of precooked and gelatinized flour 18b that comes out of the tunnel 22, undergoes grain separation into separate granules 18c by the grain separator device 19, and falls into a collection hopper 25 which feeds the pneumatic conveyor system 26, with the purpose of cooling the product.

After cooling to a temperature of 25°C to 45°C, the flour is fed via a conduit 29 into a second mixer to undergo a second supplementary hydration step and/or be mixed with further liquid ingredients, e.g. in a mixer 30 similar to or different from the one mentioned above.

Then, the rehydrated flour may be subjected to rolling by a rolling mill 31 or extrusion by an extruder 32 comprising a blade mixer 33 and an drawing unit 34: the latter provides fresh pasta possibly designed for further drying.

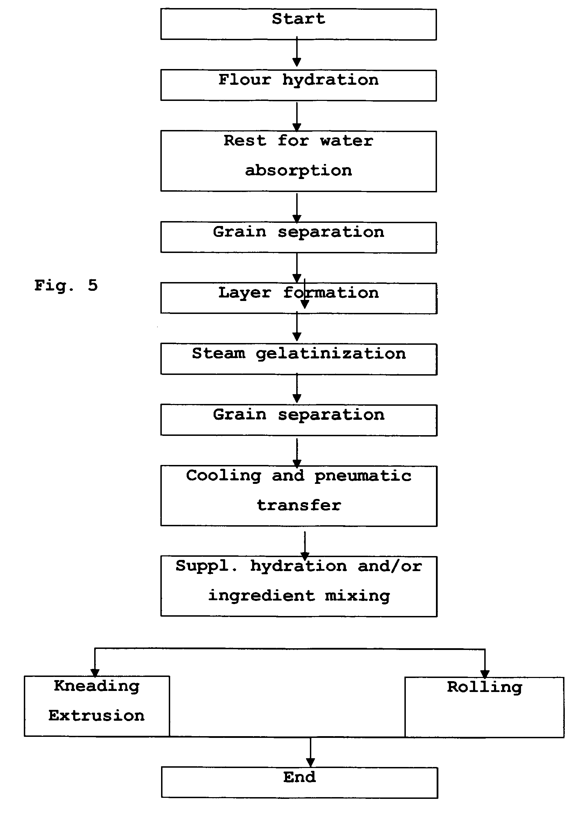

The block diagrams of Figures 4 and 5 show the main steps of the process and plant of Figures 1 and 3 of the invention, with reference to any type of flour, with or without gluten, regardless of its later use.

As shown in Figure 4, after the start of the production process, the appropriately metered flour is hydrated and possibly mixed with other ingredients. The degree of hydration depends on the properties of the flour in use, and may be determined according to process requirements; by way of illustration, it will fall in a range from 25% to 40%.

The next step is a rest step, which is carried out as the hydrated flour is conveyed by the conveyor 17, and is designed to allow the hydration water to uniformly reach the granule core. Then, the dough is subjected to grain separation, formed into a layer of predetermined thickness, as defined above, on the support belt 21, to continue its path and be subjected to a precooking and gelatinization step by steam in the tunnel 22. For example, a temperature of about 98°C will be reached and maintained for a predetermined time, as needed, and anyway controlled within a given time interval, e.g. of or below 15 minutes, preferably from 3 to 15 minutes, and depending on steam temperature and on heating time, the flour granules will be more or less precooked and gelatinized. Therefore, this method provides quick homogeneous distribution of heat within the whole flour mass.

Then the precooked and gelatinized flour will be subjected to grain separation and transferred to a drying station by a pneumatic conveyor or any other suitable means, whereupon a last step may be carried out, i.e. calibration of the dry flour by milling.

As an alternative of the above, the block diagram of Figure 5 shows a method which s similar to the one described above up to the precooking, gelatinization and grain separation step, and is completed by different unit steps.

Namely, the precooked and gelatinized separated flour, is transferred by pneumatic means and cooled, and is then fed into another mixer for supplementary hydration and mixed with other ingredients.

The dough so obtained may be directly used to produce extruded and drawn pasta, rolled pasta or different food products.

In short, a process and plant has been provided herein for improving the precooked and gelatinized flour preparation technology, in which the heating step is carried out with an ideal flour layer. Quick heat exchange and fast heat treatment times reduce the overall processing times of the process for the production of precooked and gelatinized flours and the food products that use them as a raw material.

It shall be understood that what has been described and illustrated herein with reference to the drawings is only provided by way of example; therefore, changes and/or variants may be made to the method and plant, or to the equipment thereof, without departure from the scope as defined by the claims.

## Claims

1. A plant for precooking and gelatinizing food flours, comprising:
- a mixer 10 comprising a metering screw 14, cylindrical mixing chamber 11, a bladed rotor 12, and a motor 13 for driving the blade rotor and controlling the metering screw, said metering screw located upstream from the mixing chamber to introduce ingredients into the mixing chamber;
- a first hopper 15 for loading the raw, untreated flour, pre-mixed with other ingredients into the metering screw 14;
- a hydration water feeding conduit 16 for feeding hydration water into the mixing chamber;
- a first belt conveyor 17 proximate to the mixer 10 so that hydrated flour discharged from the mixer 10 falls onto the first belt conveyor 17 to form a first layer of hydrated flour;
- a grain separator device 19, being positioned proximate to the end of the conveyor 17, to separate the first layer of hydrated flour into separate granules 18a,
- a hopper of a layer-forming device 20 being positioned to receive separate granules from the end of the first belt conveyor; said layer-forming device configured to form a second layer of hydrated flour from said granules and
- a second belt conveyor 31, being positioned to receive said second layer of hydrated flour formed from said layer-forming device, said second belt conveyor 31 being vapour permeable and
- a steam treatment apparatus comprising a tunnel 22, a piping system to feed saturated steam from a steam generator into the tunnel, **characterized in that** said tunnel 22 is configured to receive said second belt conveyor 31 so that said second layer of hydrated flour is conveyed through a steam saturated environment and the hydrated flour is precooked and gelatinized by said saturated steam.

## Patentansprüche

1. Anlage fürs Vorkochen und die Verkleisterung von Lebensmittel aus Mehl, umfassend:
- einen Mischer 10, mit einer Dosier-Schnecke 14, eine zylindrische Mischkammer, einen Schaufelrotor 12, und einen Motor 13 um den Schaufelrotor anzutreiben und die Dosier-Schnecke zu steuern, wobei die besagte Dosier-Schnecke stromaufwärts der Mischkammer angeordnet ist, um die Zutaten in die Mischkammer einzuführen;
- ein erster Trichter 15 zum Laden des rohen unbehandelten Mehl, das mit anderen Zutaten im Voraus gemischt wird, in die Dosier-Schnecke;
- ein Einleitungsrohr 16 von Hydrationswasser, um Hydrationswasser in die Mischkammer einzuleiten;
- einen ersten in der Nähe des Mischers derart vorhandenen Förderband 17, dass hydratisiertes aus dem Mischer 10 ausgetragenes Mehl auf den ersten Förderband 17 derart fällt, dass eine erste Schicht von hydratisiertem Mehl geformt wird;
- eine Kornabscheidungseinrichtung 19, die in der Nähe des Ende des Bandes 17 derart angeordnet ist, dass sie die erste Schicht von hydratisiertem Mehl in getrennten Granulaten 18a trennt,
- einen Trichter eines schichtbildenden Vorrichtung 20, der derart angeordnet ist, dass er getrennte Granulaten von dem Ende des ersten Förderband empfängt; wobei die besagte schichtbildende Vorrichtung derart gestaltet ist, dass sie eine zweite Schicht von hydratisiertem Mehl aus den besagten Granulaten bildet, und
- eine zweiten Förderband 31, der derart angeordnet ist, dass er die besagte zweite Schicht von hydratisiertem Mehl empfängt, die von dem besagten schichtbildenden Vorrichtung gebildet wird, wobei das besagte zweite Förderband dampfdurchlässig ist,
und
- eine Dampfbehandlungsvorrichtung, umfassend einen Tunnel 22, ein Leitungssystem zum Zuführen von gesättigten Dampf von einem Dampfgenerator ins Tunnel,
**dadurch gekennzeichnet, dass** der besagte Tunnel 22 derart gestaltet ist, dass er das besagte zweite Förderband 31 derart empfängt, dass die besagte zweite Schicht von hydratisiertem Mehl durch ein mit Dampf gesättigten Umfeld gefördert wird, und das hydratisierte Mehl von dem besagten gesättigten Dampf vorgekocht und verkleistert wird.

## Revendications

1. Une usine de pré-cuisson et gélatinisation de farines alimentaires, comprenant :
- un mélangeur 10 comprenant une vis de dosage 14, une chambre de mélange cylindrique 11, un rotor à pales 12, et un moteur 13 pour entraîner le rotor à pales et contrôler la vis de dosage, ladite vis de dosage étant située à mont de la chambre de mélange pour introduire des ingrédients dans la chambre de mélange ;
- une première trémie 15 pour charger la farine brut non traitée, pré-mélangée avec des autres ingrédients dans la vis de dosage 14 ;
- un conduit d'alimentation 16 d'eau d'hydratation pour alimenter de l'eau d'hydratation dans la chambre de mélange ;
- un premier transporteur à bande 17 à proximité du mélangeur 10, en sorte qu'une farine hydratée déchargée du mélangeur 10 tombe sur le premier transporteur à bande 17, pour former une première couche de farine hydratée ;
- un dispositif de séparation du grain 19, étant positionné proche à l'extrémité du transporteur 17, pour séparer la première couche de farine hydratée dans des granules séparés 18a,
- - une trémie d'un dispositif de formation de couches 20 étant positionnée pour recevoir des granules séparés de l'extrémité du premier transporteur à bande ; ledit dispositif de formation de couches étant configuré pour former une deuxième couche de farine hydratée par lesdits granules et
- un deuxième transporteur à bande 31, étant positionné pour recevoir ladite deuxième couche de farine hydratée formée par ledit dispositif de formation de couches, ledit deuxième transporteur à bande 31 étant perméable aux vapeurs et
- un appareil de traitement des vapeurs comprenant un tunnel 22, un système de conduits pour alimenter une vapeur saturée par un générateur de vapeur à l'intérieur du tunnel,
**caractérisé en ce que** ledit tunnel 22 est configuré pour recevoir ledit deuxième transporteur à bande 31 en sorte que ladite deuxième couche de farine hydratée est transportée à travers d'un environnement saturé de vapeur et la farine hydratée est précuite et gélatinisée par ladite vapeur saturée.
